# EUROPÄISCHE PATENTSCHRIFT

(11) **EP 1 521 686 B1**
(45) Veröffentlichungstag und Bekanntmachung des Hinweises auf die Patenterteilung: **04.03.2009**
(21) Anmeldenummer: 03720197.7
(22) Anmeldetag: 18.03.2003
(51) Int. Cl.: B60K 31/00, G08G 1/16, B60T 7/22, B60Q 1/52, B60K 31/18

(54) **VERFAHREN UND VORRICHTUNG ZUR BENACHRICHTIGUNG DES FAHRERS EINES KRAFTFAHRZEUGS**
METHOD AND DEVICE FOR NOTIFYING THE DRIVER OF A MOTOR VEHICLE
PROCEDE ET DISPOSITIF PERMETTANT D'INFORMER LE CONDUCTEUR D'UN VEHICULE AUTOMOBILE

(30) Priorität: 10.07.2002 DE 10231687
(43) Veröffentlichungstag der Anmeldung: 13.04.2005
(73) Patentinhaber: ROBERT BOSCH GMBH, 70442 Stuttgart (DE)
(72) Erfinder: SWOBODA, Hans-Christian, 71638 Ludwigsburg (DE); IRION, Albrecht, 70563 Stuttgart (DE)
(86) Internationale Anmeldenummer: PCT/DE2003/000872
(87) Internationale Veröffentlichungsnummer: WO 2004/007231

(56) Entgegenhaltungen:
- EP-A- 0 716 949
- EP-A- 0 897 824
- DE-A- 1 580 794
- DE-A- 3 222 263
- DE-A- 10 015 299
- DE-A- 19 933 793
- PATENT ABSTRACTS OF JAPAN vol. 003, no. 140 (M-081), 20. November 1979 (1979-11-20) & JP 54 118036 A (NIPPON DENSO CO LTD), 13. September 1979 (1979-09-13)

## Beschreibung

Die vorliegende Erfindung betrifft eine Vorrichtung und ein Verfahren zur Benachrichtigung des Fahrers eines Kraftfahrzeugs, das mit einem adaptiven Abstands- und Geschwindigkeitsregler ausgestattet ist, in dem eine Übernahmeaufforderung aktiviert wird, die dem Fahrer mitteilt, dass eine kritische Annäherung an ein Zielobjekt erfolgt. Die Aktivierung bzw. Deaktivierung der Übernahmeaufforderung erfolgt in Abhängigkeit eines festen Mindestabstandes des abstands- und geschwindigkeitsgeregelten Fahrzeugs zum Zielobjekt oder eines relativgeschwindigkeitsabhängigen Mindestabstandes des abstands- und geschwindigkeitsgeregelten Fahrzeugs in Bezug auf ein Zielobjekt oder einer maximalen, vom Abstands- und Geschwindigkeitsregler erzeugbaren Fahrzeugverzögerung entsprechend den im Oberbegriff der unabhängigen Ansprüche enthaltenen Maßnahmen.

### Stand der Technik

Aus der DE 100 15 299 A1 ist ein Verfahren und eine entsprechende Vorrichtung zur Auslösung einer Übernahmeaufforderung bekannt, die dem Fahrer eines Fahrzeugs mit adaptivem Fahrgeschwindigkeitsregler signalisiert, dass die Fahrsituation voraussichtlich nicht mehr vom Fahrgeschwindigkeitsregelsystem kontrolliert werden kann und der Fahrer eingreifen muss. Durch die Überwachung zweier oder mehrerer Fahrzeuggrößen, die für die Auslösung der Übernahmeaufforderung kausal sind, wird die Wahrscheinlichkeit einer Fehlalarmierung durch das System reduziert und die Auslösung der Übernahmeaufforderung an die momentane Fahrzeuggeschwindigkeit angepasst.

Aus der EP 0 897 824 A2 ist ein Abstands- und Geschwindigkeitsregelsystem für Fahrzeuge bekannt, das in zwei Betriebsarten betrieben werden kann, wobei in der ersten Betriebsart eine Geschwindigkeitsregelung durchgeführt wird, so dass die Geschwindigkeit konstant gehalten wird und in der zweiten Betriebsart einen Folgemodus durchgeführt wird, in dem der Abstand zu einem vorausfahrenden Fahrzeug konstant gehalten wird. Die Umschaltung zwischen den beiden Betriebsarten erfolgt dabei selbständig durch das System, wobei dem Fahrer mittels Symbolen angezeigt wird, welche der beiden Betriebsarten derzeit aktiv ist. Wenn das System beabsichtigt, vom Geschwindigkeitsregelmodus in den Abstandsregelmodus umzuschalten, wird dem Fahrer die vor dem Umschaltezeitpunkt mitgeteilt, so dass dieser in der Lage ist, den Betriebsartwechsel zu vermeiden.

Aus der DE 15 80 794 ist ein System für Fahrzeuge bekannt, bei dem Abstände zu Objekten gemessen werden und bei Unterschreitung eines Mindestabstands eine automatische Bremsung eingeleitet wird. Weiterhin ist vorgesehen, bei einem Überholmanöver eines LKW dem fahrer,anzuzeigen; ab welchem Abstand zum überholten Fahrzeug er wieder gefahrlos in die ursprüngliche Fahrspur einscheren kann, was dem Fahrer optisch mitgeteilt wird.

Aus der DE 100 15 299 A1 ist ein Verfahren und eine entsprechende Vorrichtung zur Auslösung einer Übernahmeaufforderung bekannt, die dem Fahrer eines Fahrzeugs mit adaptivem Fahrgeschwindigkeitsregler signalisiert, daß die Fahrsituation voraussichtlich nicht mehr vom Fahrgeschwindigkeitsregelsystem kontrolliert werden kann und der Fahrer eingreifen muß. Durch die Überwachung zweier oder mehrerer Fahrzeuggrößen, die für die Auslösung der Übernahmeaufforderung kausal sind, wird die Wahrscheinlichkeit einer Fehlalarmierung durch das System reduziert und die Auslösung der Übernahmeaufforderung an die momentane Fahrzeuggeschwindigkeit angepasst

Aus der DE 199 33 793 A1 ist ein Verfahren und eine Vorrichtung zum Steuern mindestens einer von mehreren Verzögerungsvorrichtungen bekannt, um ein nachfolgendes Fahrzeug zu verzögern. Es wird lediglich dann eine Warnung erzeugt, wenn ein Verzögerungspegel, der durch die ausgewählte eine Verzögerungsvorrichtung oder die ausgewählten mehreren Verzögerungsvorrichtungen erzielbar ist, höher als ein vorbestimmter Maximalpegel ist, auch wenn der Abstand zwischen zwei sich bewegenden Fahrzeugen kürzer als ein vorbestimmter Warnabstand ist

Aus der EP 0 716 949 A1 ist ein Gerät und ein Verfahren zur Fahrgeschwindigkeitsregelung bekannt, bei dem ermittelt wird ob ein das näheste, erkannte Fahrzeug ein Fahrzeug ist, das auf der eigenen Fahrspur oder auf einer benachbarten Fahrspur fährt. Wird erkannt, dass das Fahrzeug auf einer langsameren Fahrspur fährt, so ist ein Überholen dieses Fahrzeugs durchführbar und falls erkannt wird, dass das Fahrzeug auf einer benachbarten, schnelleren Fahrspur fährt, so wird ein rechtswidriges Überholen des Fahrzeugs auf der langsameren Fahrspur vermieden.

Aus dem Patent Abstract of Japan der JP 54118036 ist ein Verfahren und eine Vorrichtung zur Überwachung des rückwärtigen Bereichs einer benachbarten Überholspur bekannt, wobei ein Alarm an den Fahrer ausgegeben wird, wenn sich ein folgendes Fahrzeug auf der benachbarten Spur dem Fahrzeug so weit nähert, dass ein Mindestwert unterschritten wird, wodurch der Fahrer vor einem gefährlichen Spurwechsel gewarnt wird.

Aus der DE 32 22 263 ist ein Abstands-Warnsystem für Kraftfahrzeuge im Straßenverkehr, mit einer Radar-Anlage und einem Auswerte-Rechner sowie den bekannten Verfahren zur Abstandsmessung und zur Auswertung der Meßergebnisse als technischer Grundlage, bekannt. Darüber hinaus verfolgt das System in einer eigenen Betriebsart nur diejenigen Echo-Signale, die von vorausbewegten Fahrzeugen stammen. Zweck dieser Auswahl ist es, Fehlwamungen in komplexen Verkehrssituationen, wie sie vor allem im engen Stadtverkehr und auf kurvenreichen Landstraßen vorkommen, auszuschalten. Wahlweise kann damit der herkömmliche Überwachungsmodus für einfache Geradeaus-Fahrt bzw. für den weiträumigen Schnellverkehr kombiniert werden. Die Umschaltung zwischen den beiden Betriebsarten erfolgt bei Bedarf automatisch, und zwar in Abhängigkeit von der jeweiligen Fahrsituation, die sich primär aus der Eigengeschwindigkeit, dem Lenkwinkel und dem Blinkerstand ergibt. Das Warnsystem ist ohne äußere Voraussetzungen einsatzfähig und insofern autark. Andererseits läßt es sich ebenso als Teil eines Abstands-Regelungssystems betreiben.

Aus der EP 1346 892 A2 ist ein System und ein Verfahren zur Fahrerunterstützung bekannt, bei dem die Fahreraktion, die Fahrzeugbewegung und das Fahrzeugumfeld beobachtet und ausgewertet werden und bei Annäherung eines anderen Fahrzeugs der Fahrer aufgefordert wird, einen Bremsdruckaufbau durchzuführen oder zumindest das Fahrpedal zurückzunehmen, wobei die Stärke der Fahreraufforderung in Abhängigkeit der Annäherungsrate bestimmt wird.

Aus der EP 1356 978 A1 ist ein Verfahren zur Geschwindigkeits- und Abstandsregelung bei Kraftfahrzeugen bekannt, bei dem der Abstand eines vorausfahrenden Fahrzeugs gemessen wird und für die Abstandsregelung mindestens zwei Betriebsmodi vorgesehen sind (z.B. ACC und Stop & Go), die in verschiedenen, einander überlappenden Geschwindigkeitsbereichen aktivierbar sind, und bei dem die Umschaltung zwischen diesen Betriebsmodi zumindest in einer Richtung nur durch einen Fahrerbefehl möglich ist, und die Geschwindigkeit des vorausfahrenden Fahrzeugs anhand der Geschwindigkeit des eigenen Fahrzeugs und der gemessenen Abstands- und/oder Relativgeschwindigkeitsdaten in die Zukunft extrapoliert wird und daß eine Umschaltaufforderung an den Fahrer ausgegeben wird, wenn die extrapolierte Geschwindigkeit außerhalb des zulässigen Bereichs für den aktuellen Modus und die aktuelle Geschwindigkeit innerhalb des zulässigen Bereichs für den anderen Modus liegt.

Aus der gattungsgemäßen EP 1 101 647 A2 ist ein Verfahren und eine Vorrichtung zur automatischen Geschwindigkeits- und Abstandsregelung bekannt, bei dem ein erster Geschwindigkeitswert vorgegeben wird, bis zu dem die Fahrzeuggeschwindigkeit geregelt wird, bei dem ein Betriebszustand ausgewählt wird, in dem das Fahrzeug in einem vorgegebenen Abstand zum vorausfahrenden Fahrzeug geregelt wird, bei dem der Abstand und die Geschwindigkeit automatisch eingehalten werden, bei dem die Verkehrssituation vor dem eigenen Fahrzeug erfasst wird, und bei Vorhandensein eines vorherfahrenden Fahrzeugs mittels einer Anzeige angezeigt wird, dass ein vorherfahrendes Fahrzeug vorhanden ist, und bei Erkennung eines beschleunigenden oder verzögernden Eingriffs des Fahrers die Regelung des Abstands und der Geschwindigkeit unterbrochen wird und die Anzeige des Vorhandenseins eines vorherfahrenden Fahrzeugs beibehalten wird.

### Kern und Vorteile der Erfindung

Der Kern der vorliegenden Erfindung ist es, ein Verfahren und eine entsprechende Vorrichtung anzugeben, die den Fahrer eines Kraftfahrzeugs mit adaptivem Abstands- und Geschwindigkeitsregler mittels einer Übernahmeaufforderung benachrichtigt, wenn eine kritische Annäherung an ein Zielobjekt erfolgt. Die Aktivierung bzw. Deaktivierung der Übernahmeaufforderung soll dabei derart erfolgen, dass sie für den Fahrer jederzeit nachvollziehbar ist und den Fahrkomfort des adaptiven Abstands- und Geschwindigkeitsregelsystems weder durch zu frühe, noch durch zu späte Aktivierung bzw. Deaktivierung der Übernahmeaufforderung beeinträchtigt wird.

Erfindungsgemäß wird dieses durch die Merkmale der unabhängigen Ansprüche gelöst. Vorteilhafte Weiterbildungen und Ausgestaltungen ergeben sich aus den Unteransprüchen.

Nach der Erfindung wird die Übernahmeaufforderung auch dann ausgegeben, wenn der Fahrer das Abstands- und Geschwindigkeitsregelsystem übersteuert. Ein Übersteuern des Abstands- und Geschwindigkeitsregelsystems besteht dann, wenn der Fahrer das Gaspedal drückt und somit das Fahrzeug zu einer Bescheunigung veranlasst, die nicht durch Abstands- und Geschwindigkeitsregelgrößen vorgesehen ist. In diesem Fall wird bei einer kritischen Annäherung an ein Zielobjekt die Übernahmeaufforderung aktiviert bzw. deaktiviert um dem Fahrer mitzuteilen, dass er durch sein Übersteuern den Dynamikbereich des Abstands- und Geschwindigkeitsregelsystems verlässt und ein abruptes Beenden des Übersteuems zu einer unkomfortablen Reglerreaktion führen kann.

Erfindungsgemäß sind die Aktivierungsschwellen und die Deaktivierungsschwellen der Übernahmeaufforderung nicht identisch. Dadurch, dass die Deaktivierungsschwellen der Übernahmeaufforderung bezüglich der Aktivierungsschwellen zu unkritischeren Abstands- und Relativgeschwindigkeitskombinationen verschoben sind, erreicht man eine Hystereseeffekt, der ein Flackern der Übernahmeaufforderung verhindert, so dass der Fahrer durch ein häufiges Aktivieren und Deaktivieren der Übernahmeaufforderung nicht verwirrt wird.

Vorteilhafter Weise ist die Übernahmeaufforderung als eine optische Anzeige im Blickfeld des Fahrers und/oder eines akustischen Signals im Fahrzeuginnenraum ausgeführt. Durch das Vorsehen der Übernahmeaufforderung als optische Anzeige oder als ein akustisches Signal oder einer Kombination hieraus ist sichergestellt, dass der Fahrer auch bei ablenkenden Umgebungsbedingungen von der Aktivierung der Übernahmeaufforderung Kenntnis nimmt.

Besonders vorteilhaft ist es, dass das Systems zur Abstands- und Geschwindigkeitsregelung, das die Übernahmeaufforderung zur Benachrichtigung des Fahrers steuert, Radarsignale oder Lidarsignale aussendet und empfängt, mittels der vorausfahrende Fahrzeuge als Zielobjekte erkennt werden können.

Von besondere Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs, vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein Blockschaltbild eines Ausführungsbeispiels der erfindungsgemäßen vorrichtung,
- Figur 2: ein Abstands-Relativgeschwindigkeits-Diagramm zur Erläuterung des erfindungsgemäßen Verfahrens und
- Figur 3: ein Zustand-Übergangs-Diagramm des erfindungsgemäßen Verfahrens.

### Beschreibung von Ausführungsbeispielen

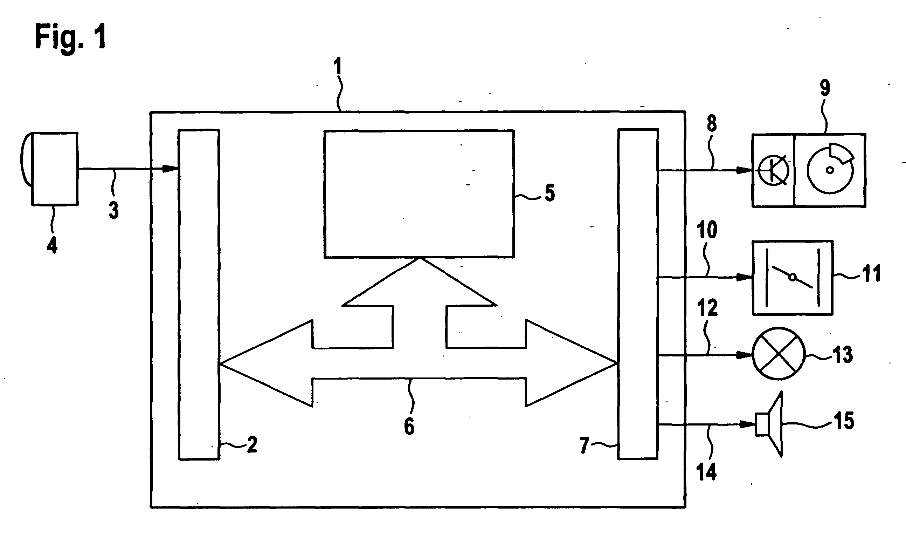

In Figur 1 ist ein Blockschaltbild einer erfindungsgemäßen Vorrichtung dargestellt. Zu erkennen ist der Abstands- und Geschwindigkeitsregler 1, der über eine Eingangsschaltung 2 verfügt. Mittels der Eingangsschaltung 2 werden dem Abstands- und Geschwindigkeitsregler Eingangssignale 3 von einem Radar- oder Lidarsensor 4 zugeführt. Der Radar- oder Lidarsensor 4 sendet dabei Radar- oder Laserstrahlung aus, die zum Teil an Objekten reflektiert werden und von dem Radar- oder Lidarsensor empfangen werden. Im Falle eines Radarsensors kann die Radarstrahlung eine FMCW-Modulation oder eine Pulsmodulation aufweisen. Der Radar- oder Lidarsensor 4 erzeugt aus den gemessenen Empfangssignalen Ausgangssignale 3, die dem Abstands- und Geschwindigkeitsregler 1 als Eingangssignale zugeführt werden. Diese Signale bestehen mindestens aus den Größen Abstand der Objekte d sowie Relativgeschwindigkeiten Vrel der Objekte in Bezug auf das abstands- und geschwindigkeitsgeregelte Fahrzeug. Der Abstands- und Geschwindigkeitsregler 1 bekommt diese Größen mittels der Eingangsschaltung 2 zugeführt und leitet diese mittels eines Datenaustauschsystems 6, das beispielsweise ein CAN-Bus sein kann, an eine Verarbeitungseinrichtung 5 weiter. Diese Verarbeitungseinrichtung 5 kann beispielsweise ein Mikroprozessor oder ein Signalprozessor sein, in dem aus den vom Sensor 4 gemessenen Größen Stell- und Steuergrößen gebildet werden. Hierzu ermittelt die Verarbeitungseinrichtung 5 aus der relativen Position der vom Sensor 4 erkannten Objekte sowie deren Abstand d und deren Relativgeschwindigkeit Vrel mindestens ein Zielobjekt, das für die Abstands- und Geschwindigkeitsregelung von besonderer Relevanz ist, da diese Zielobjekte in besonderem Maß die Ausgangsgrößen beeinflussen. So erzeugt die Verarbeitungseinrichtung 5 Steuersignale für eine Verzögerungseinrichtung 9 des Fahrzeugs, Steuersignale für ein leistungsbestimmendes Stellelement einer Fahrzeugantriebseinheit 11, die beispielsweise als Drosselklappenstellglied ausgebildet sein kann, sowie Signale zur Aktivierung bzw. Deaktivierung einer Übernahmeaufforderung für den Fahrer des Fahrzeugs. Diese, von der Verarbeitungseinrichtung 5 erzeugten Ausgangssignale werden mittels des Datenaustauschsystems 6 auf eine Ausgangsschaltung 7 ausgegeben. Über die Ausgangsschaltung 7 wird ein Verzögerungssignal 8 an eine Verzögerungseinrichtung 9 des Fahrzeugs ausgegeben. Dieses Verzögerungssignal 8 wird üblicherweise einer Bremsenansteuereinrichtung zugeführt, die die Bremsen des Fahrzeugs entsprechend dem Verzögerungssignal 8 betätigt. Weiterhin wird über die Ausgangsschaltung 7 ein Beschleunigungssignal 10 ausgegeben, das ein leistungsbestimmenden Stellelement 11 einer Fahrzeugantriebsvorrichtung zugeführt wird. Üblicherweise handelt es sich bei diesem leistungsbestimmenden Stellelement 11 um eine elektrisch betätigte Drosselklappe oder eine Kraftstoffeinspritzpumpe. Durch das Beschleunigungssignal 10 wird die Fahrzeugantriebsvorrichtung in entsprechender Weise gemäß den Reglerausgangsgrößen verändert. Weiterhin kann über die Ausgangsschaltung 7 ein Übernahmeaufforderungssignal 12 ausgegeben werden, das einer optischen Übernahmeaufforderungseinrichtung 13 zugeführt wird. Diese optische Übernahmeaufforderungseinrichtung besteht beispielsweise aus einer Lichtquelle im Sichtbereich des Fahrers oder aus einer Klartextanzeige, die im Sichtbereich des Fahrers angebracht ist und dem Fahrer visuell signalisiert, dass die begrenzte Verzögerungsfähigkeit des Abstands- und Geschwindigkeitsregelsystems nicht ausreicht um eine kritische Annäherung des eigenen Fahrzeugs an eine Zielobjekt zu verhindern. In ähnlicher Weise kann von der Ausgangsschaltung 7 ein weiteres Übernahmeaufforderungssignal 14 an eine akustische Übernahmeaufforderungseinrichtung 15 ausgegeben werden. Diese akustische Übernahmeaufforderungseinrichtung 15 kann beispielsweise ein Summer oder ein Klingelton im Fahrzeuginnenraum sein oder aber eine Sprachausgabeeinrichtung sein, die den Fahrer zu einem Verzögerungseingriff auffordert. Da Abstands- und Geschwindigkeitsregler häufig als Komfortsysteme ausgelegt sind und den Fahrer in kritischen Situationen nicht aus der Verantwortung entlassen sollen, selbst eine Verzögerung einzuleiten oder eine automatisch eingeleitete Verzögerung zu verstärken, ist die Verzögerungsdynamik, die der Abstands- und Geschwindigkeitsregler steuern kann oftmals auf 2 bis 3 m/sek² begrenzt. Diese begrenzte Verzögerungsfähigkeit des Abstands- und Geschwindigkeitsreglers macht es erforderlich, dem Fahrer mitzuteilen, wann der Bereich der automatischen Verzögerungsdynamik durch einen Fahrereingriff verlassen werden muss um eine kritische Annäherung an ein erkanntes Objekt zu verhindern.

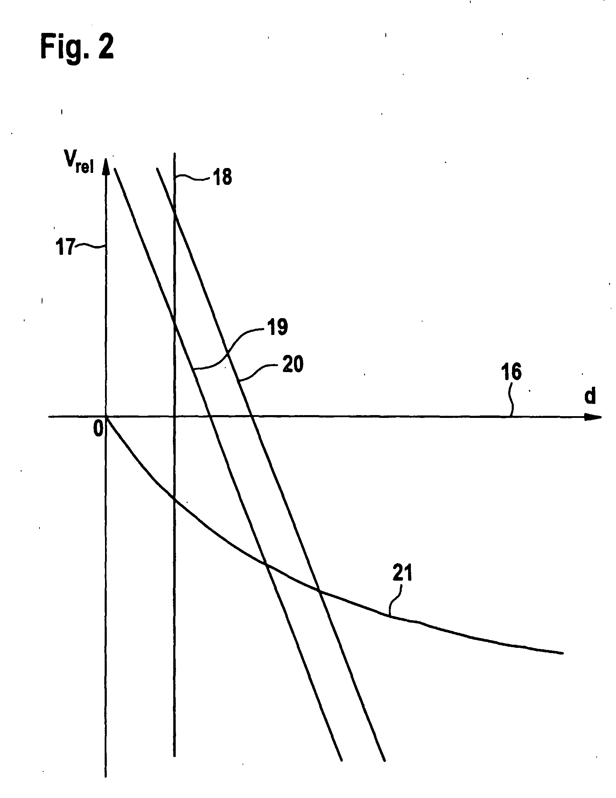

In Figur 2 ist ein Abstands-Relativgeschwindigkeits-Diagramm dargestellt, bei dem auf der Abszisse 16 der Abstand des Zielobjekts zum abstands- und geschwindigkeitsgeregelten Fahrzeug aufgetragen ist und auf der Ordinate 17 die Relativgeschwindigkeit des Zielobjektes in Bezug auf das abstands- und geschwindigkeitsgeregelte Fahrzeug aufgetragen ist. Die auf der Ordinate 17 aufgetragene Relativgeschwindigkeit beschreibt im Falle positiver Relativgeschwindigkeitswerte Vrel den Fall, dass sich das Zielobjekt mit einer größeren Geschwindigkeit fortbewegt als das eigene Fahrzeug, das heißt dass sich der Abstand d zwischen dem Zielobjekt und dem eigenen Fahrzeug mit der Zeit vergrößert und im Falle negativer Relativgeschwindigkeitswerte Vrel, dass sich der Abstand d zwischen dem Zielobjekt und dem eigenen Fahrzeug mit der Zeit verringert, da sich das vorausfahrende Zielobjekt langsamer fortbewegt als das eigene Fahrzeug. Zur Bestimmung, ob die Übernahmeaufforderung 13, 15 zu aktivieren oder zu deaktivieren ist hängt von der Kombination der Relativgeschwindigkeit Vrel und des Abstandes d des Zielobjektes zum eigenen Fahrzeug ab. Die senkrecht in das Diagramm der Figur 2 eingetragene Linie 18 stellt eine erste Aktivierungs- und Deaktivierungsschwelle dar. Diese Linie 18 definiert einen absoluten Mindestabstand dmin zwischen dem Zielobjekt und dem eigenen Fahrzeug, bei dessen Unterschreitung die Übernahmeaufforderung aktiviert wird und bei dessen Überschreitung die Übernabmeaufforderung deaktiviert wird. Dieser absolute Mindestabstand dmin ist geschwindigkeitstunabhängig eingestellt. Die Gerade 19 stellt eine zweite Aktivierungsschwelle für die Übernahmeaufforderung dar, die einen geschwindigkeitsabhängigen repräsentiert. Die zu dieser Geraden 19 parallel angeordnet Gerade 20 stelle hierbei die Deaktivierungsschwelle dar, so dass bei dieser geschwindigkeitsabhängigen Aktivierungs- bzw. Deaktivierungsschwelle ein Hystereseeffekt entsteht, der ein schnelles und sich mehrfach wiederholendes Aktivieren und Deaktivierung der Übernahmeaufforderung verhindern soll. Wenn die Kombination aus Relativgeschwindigkeit Vrel und Abstand d derart auftritt, dass diese durch einen Diagrammpunkt repräsentiert wird, der links unterhalb der Geraden 19 liegt, so wird die Übernahmeaufforderung aktiviert und wird erst wieder dann wieder deaktiviert, wenn die Kombination aus Relativgeschwindigkeit Vrel und Abstand d einenDiagrammpunkt beschreibt, der rechts oberhalb der Deaktivierungsgeraden 20 angeordnet ist. Dieser geschwindigkeitsabhängige Mindestabstand sorgt dafür, dass bei negativer Relativgeschwindigkeit, das heißt bei einer höheren Eigengeschwindigkeit als der Geschwindigkeit des Zielobjektes bereits bei einem größeren Abstand d die Übernahmeaufforderung aktiviert wird im Vergleich zu positiven Relativgeschwindigkeiten Vrel, bei denen sich das Zielobjekt entfernt, da es eine höhere Geschwindigkeit hat als das eigene Fahrzeug. Weiterhin ist eine dritte Aktivierungs- bzw. Deaktivierungsschwelle 21 eingetragen, die die maximale, vom Abstands- und Geschwindigkeitsregler erzeugbare Fahrzeugverzögerung berücksichtig. Da die Abstands- und Geschwindigkeitsregler als Komfortsysteme ausgelegt sind, liegt die maximale Verzögerung, die ein derartiges System erzeugen kann, weit unter der maximal möglichen Fahrzeugverzögerung. Üblicherweise sind Abstands- und Geschwindigkeitsregler in der Lage, Fahrzeugverzögerungen im Bereich von 2 bis 3 m/sek² zu steuern. Die Linie 21 in Figur 2 gibt die Wertepaare, bestehend aus Relativgeschwindigkeit Vrel und Abstand d an, bei denen das Fahrgeschwindigkeitsregelsystem mit der maximal möglichen Systemverzögerung von beispielsweise 2 bis 3 m/sek² verzögert und eine Kollision mit dem vorausfahrenden Zielobjekt gerade noch vermieden werfen kann. Bei einer Kombination aus Relativgeschwindigkeit Vrel und Abstand d, deren Diagrammpunkt laut Figur 2 links unterhalb der Kurve 21 liegt, wäre der Abstands- und Geschwindigkeitsregler aufgrund der begrenzten Verzögerungsfähigkeit nicht in der Lage, eine Kollision mit dem vorausfahrenden Zielobjekt zu verhindern. In diesem Fall muss der Fahrer des Fahrzeugs aufgefordert werden, selbst eine Verzögerung einzuleiten, deren Verzögerungswerte betragsmäßig größer sind als die vom System durchführbaren, so dass der Fahrer eine Kollision durch einen Bremseingriff vermeiden kann. Hierzu muss der Fahrer jedoch benachrichtigt werden, was durch Auslösen der Übernahmeaufforderung geschieht. Ein Überschreiten der Linie 21 von Wertepaaren, bestehend aus Relativgeschwindigkeit Vrel und Abstand d, die rechts oberhalb der Linie 21 liegen, hin zu Wertepaaren, die links unterhalb der Kurve 21 liegen, resultieren in einer Aktivierung der Übernahmeaufforderung, die den Fahrer zu einem Bremseneingriff auffordert. Verändert sich der Betriebspunkt laut Figur 2, bestehend aus den Werten Relativgeschwindigkeit Vrel und Abstand d derart, dass die Linie 21 von Punkten, die links unterhalb der Kurve 21 liegen hin zu Wertepaaren, die rechts oberhalb der Kurve 21 liegen, so wird die Übernahmeaufforderung deaktiviert, da der Abstands- und Geschwindigkeitsregler wieder in der Lage ist, unter Berücksichtigung der maximal möglichen, begrenzten Systemverzögerung eine Kollision mit dem vorausfahrenden Zielobjekt zu vermeiden.

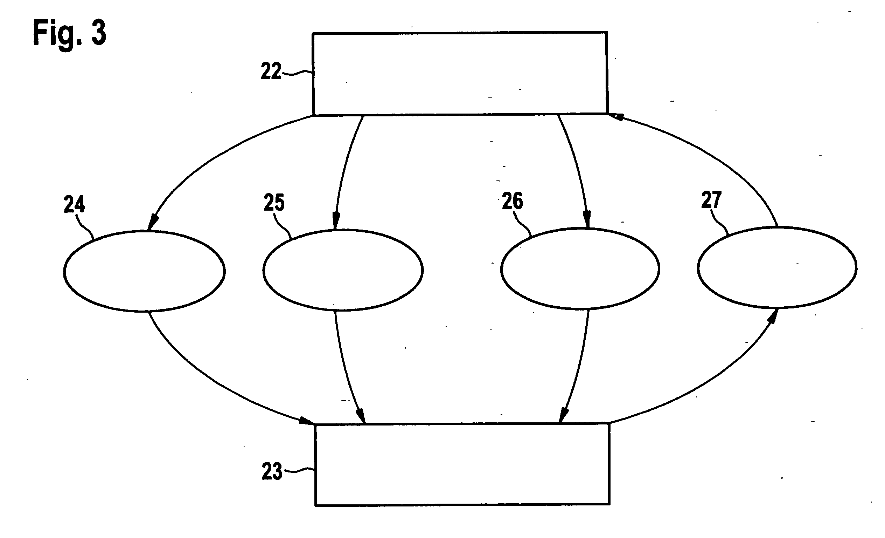

In Figur 3 ist ein Zustands-Übergangs-Diagramm dargestellt, das die Aktivierung bzw. die Deaktivierung der Übernahmeaufforderung beschreibt sowie die Bedingungen, die für derartige Zustandsübergänge notwendig sind. In Figur 3 sind die rechteckigen Zustandsblöcke 22 und 23 dargestellt. Der Zustandsblock 22 beschreibt hierbei den Zustand der deaktivierten Übernahmeaufforderung, indem die optische oder akustische Übernahmeaufforderung abgeschaltet ist. Block 23 symbolisiert den Zustand, dass die Übernahmeaufforderung aktiviert ist, also dass die optische Übernahmeaufforderung beleuchtet ist, oder eine Klartextanzeige dem Fahrer zur Ansicht gebracht wird oder dass eine akustische Übernahmeaufforderung ertönt. In Abhängigkeit der Veränderung der Wertepaare für Relativgeschwindigkeit Vrel und Abstand d zum Zielobjekt gemäß Figur 2 finden Zustandsänderungen gemäß Figur 3 zwischen aktivierter Übernahmeaufforderung und deaktivierter Übernahmeaufforderung statt. So wird die Übernahmeaufforderung beispielsweise aktiviert, wenn gemäß Block 24 ein absoluter Mindestabstand dmin unterschritten wird. Dies ist gemäß Figur 2 der Fall, sofern sich der Abstand d derartig verringert, dass ein Wertepaar aus Relativgeschwindigkeit Vrel und Abstand d die Gerade 19 von rechts nach links überschreitet, also der Abstand d sich derart verringert, dass er kleiner als der Mindestanstand dmin wird. Eine derartige Veränderung des Wertepaares aus Vre1 und d, bei der die Darstellung im Diagramm nach Figur 2 von Punkten links neben der Geraden 18 hin zu Punkten, die rechts neben der Geraden 18 liegen, also eine Vergrößerung des Abstands d, so dass dmin überschritten wird, resultiert in einer Deaktivierung der Übernahmeaufforderung, indem vom Zustand 23 in Zustand 22 übergegangen wird, sofern keine anderen Auslösebedingungen vorliegen. Ebenso findet eine Aktivierung in Folge eines Zustandsübergangs von Block 22 nach Block 23 statt, falls ein relativgeschwindigkeitsabhängiger Mindestabstand unterschritten wird. Dies ist der Fall, sobald Wertepaare aus Relativgeschwindigkeit Vre1 und Abstand d sich gemäß Figur 2 derart verändern, dass der dieses Wertepaar repräsentierende Punkt in Figur 2 von der Halbebene, rechts oberhalb der Geraden 19 hin zu Wertepaaren gemäß der Halbebene links unterhalb der Geraden 19 übergeht. Eine dritte Übergangsbedingung, die in Block 26 dargestellt ist, die ebenfalls einen Zustandsübergang von Block 22 in Block 23 repräsentiert, besteht in der Überschreitung der Linie 21 von Wertepaaren rechts oberhalb dieser Linie 21 hin zu Wertepaaren links unterhalb dieser Linie 21. In diesem Fall wird der Fahrer darauf hingewiesen, dass die maximal mögliche Systemverzögerung nicht ausreicht, um eine Kollision mit dem vorausfahrenden Zielobjekt zu unterbinden. Eine Deaktivierung der Übernahmeaufforderung wird durch den Übergang 27 repräsentiert, der einen Zustandsübergang von Block 23 in Block 22 auslöst. In diesem Fall wird die aktivierte Übernahmeaufforderung deaktiviert und dem Fahrer hiermit signalisiert, dass er nicht bzw. nicht mehr in das Fahrgeschehen eingreifen muss, da die Gefahr einer kritischen Annäherung an ein Zielobjekt momentan nicht bzw. nicht mehr besteht. Dieser Übergang gemäß 27 liegt dann vor, wenn keine der Aktivierungsbedingungen gemäß Übergängen 24, 25 oder 26 mehr erfüllt sind. Gemäß den Wertepaaren aus Figur 2 ist dies dann der Fall, wenn der momentane Abstand zum Zielobjekt d sowie die momentane Relativgeschwindigkeit Vrel derartig sind, dass ein Diagrammpunkt eingenommen wird, der gemäß Figur 2 rechts neben der Geraden 18 liegt, rechts oberhalb der Deaktivierungsgeraden 20 sowie rechts oberhalb der hyperbolischen Linie 21. Sind diese drei Bedingungen erfüllt, so geht der Zustand 23, in dem die Übernahmeaufforderung aktiv ist gemäß Übergang 27 in Zustand 22 über, indem die Übernahmeaufforderung deaktiviert wird.

Gemäß weiterer Ausführungsbeispiele ist eine Aktivierung 23 bzw. Deaktivierung 22 der Übernahmeaufforderung 13, 15, nur bei Unter- bzw. Überschreitung des festen , Mindestabstandes 18 zwischen dem vorausbewegten Zielobjekt und dem abstands- und geschwindigkeitsgeregelten Fahrzeug vorgesehen. Ebenso ist es möglich, dass anstatt des festen Mindestabstandes 18 nur in Abhängigkeit des relativgeschwindigkeitsabhängigen Mindestabstandes eine Aktivierung 23 bzw. Deaktivierung 22 der Übernahmeaufforderung 13,15 bei Unterschreiten der Aktivierungsgeraden 19 bzw. Überschreiten der Deaktivierungsgeraden 20 erfolgt. Weiterhin ist es ebenso denkbar, dass die Aktivierung 23 bzw. Deaktivierung 22 der Übernahmeaufforderung 13,15 nur in Abhängigkeit der einer maximalen, vom Abstands- und Geschwindigkeitsregler 1 erzeugbaren Fahrzeugverzögerung erfolgt, je nachdem ob die vom Abstands- und Geschwindigkeitsregler 1 erzeugbare maximale Fahrzeugverzögerung ein rechtzeitiges Anhalten des Folgefahrzeugs vor Erreichen des Zielobjektes voraussichtlich nicht mehr möglich ist oder wieder möglich wird. Weitere Ausführungsbeispiele der Erfindung sehen Verfahren und Vorrichtungen vor, die in Abhängigkeit von zwei der oben beschriebenen Einzelbedingungen eine Aktivierung bzw. Deaktivierung der Übernahmeaufforderung vorsehen. Die Figur 3 vereinfacht sich demgemäss, indem ein oder zwei Übergangsbedingungen der Übergänge 24, 25, oder 26 entfallen und sich Block 27 dementsprechend vereinfacht.

## Patentansprüche

1. Verfahren zur Benachrichtigung des Fahrers eines Kraftfahrzeugs mit adaptivem Abstands- und Geschwindigkeitsregler (1,4), indem eine Übernahmeaufforderung (13,15) aktiviert (23) bzw. deaktiviert (22) wird, die dem Fahrer mitteilt, dass eine kritische Annäherung an ein Zielobjekt erfolgt, wobei die Aktivierung (23) bzw. Deaktivierung (22) der Übernahmeaufforderung (13,15) in Abhängigkeit
- eines festen Mindestabstandes des abstands- und geschwindigkeitsgeregelten Fahrzeugs zum Zielobjekt
oder
- eines relativgeschwindigkeitsabhängigen Mindestabstandes des abstands- und geschwindigkeitsgeregelten Fahrzeugs in Bezug auf ein Zielobjekt
oder
- einer maximalen, vom Abstands- und Geschwindigkeitsregler erzeugbaren Fahrzeugverzögerung
erfolgt, **dadurch gekennzeichnet, dass** die Aktivierungsschwellen (19) und die Deaktivierungsschwellen (20) der Übernahmeaufforderung nicht identisch sind.

2. Verfahren nach Anspruch 1, **dadurch gekennzeichnet, dass** die Übernahmeaufforderung eine optische Anzeige (13) im Blickfeld des Fahrers und/oder ein akustisches Signal (15) im Fahrzeuginnenraum ist.

3. Verfahren nach einem der vorhergehenden Ansprüche, **dadurch gekennzeichnet, dass** die Übernahmeaufforderung auch ausgegeben wird, wenn der Fahrer das Abstands- und Geschwindigkeitsregelsystem übersteuert.

4. Verfahren nach einem der vorhergehenden Ansprüche, **dadurch gekennzeichnet, dass** das System zur Abstands- und Geschwindigkeitsregelung Radarsignale aussendet und empfängt, mittels der vorausfahrende Fahrzeuge als Zielobjekte erkannt werden können.

5. Vorrichtung zur Abstands- und Geschwindigkeitsregelung eines Kraftfahrzeugs, die eine Übernahmeaufforderung ausgibt, die dem Fahrer mitteilt, dass eine kritische Annäherung an ein Zielobjekt erfolgt, **dadurch gekennzeichnet, dass** wobei die Aktivierung bzw. Deaktivierung der Übernahmeaufforderung in Abhängigkeit
- eines festen Mindestabstandes des abstands- und geschwindigkeitsgeregelten Fahrzeugs zum Zielobjekt
oder
- eines relativgeschwindigkeitsabhängigen Mindestabstandes des abstands- und geschwindigkeitsgeregelten Fahrzeugs in Bezug auf ein Zielobjekt
oder
- einer maximalen, vom Abstands- und Geschwindigkeitsregler erzeugbaren Fahrzeugverzögerung
erfolgt,
**dadurch gekennzeichnet, dass** die Vorrichtung derart ausgelegt ist, dass die Aktivierungsschwellen (19) und die Deaktivierungsschwellen (20) der Übernahmeaufforderung nicht identisch sind.

6. Vorrichtung nach Anspruch 5, **dadurch gekennzeichnet, dass** die Übernahmeaufforderung als optische Anzeige im Blickfeld des Fahrers und/oder als akustisches Signal im Fahrzeuginnenraum ausgeprägt ist.

7. Vorrichtung nach einem der Ansprüche 5 oder 6, **dadurch gekennzeichnet, dass** das System zur Abstands- und Geschwindigkeitsregelung (4) Radarsignale aussendet und empfängt, mittels der vorausfahrende Fahrzeuge als Zielobjekt erkannt werden können.

## Claims

1. Method for notifying the driver of a motor vehicle having an adaptive inter-vehicle distance and cruise controller (1, 4), wherein a request to assume control (13, 15) is activated (23) or deactivated (22), which request to assume control (13, 15) informs the driver that a critical approaching movement toward a target object is occurring, wherein the activation (23) or deactivation (22) of the request to assume control (13, 15) takes place as a function of
- a fixed minimum distance between the distance- and speed-controlled vehicle and the target object
or
- a relative-speed-dependent minimum distance between the distance- and speed-controlled vehicle and a target object
or
- a maximum vehicle deceleration which can be generated by the inter-vehicle distance and cruise controller,
**characterized in that** the activation thresholds (19) and the deactivation thresholds (20) of the request to assume control are not identical.

2. Method according to Claim 1, **characterized in that** the request to assume control is a visual display (13) in the driver's field of vision and/or an acoustic signal (15) in the passenger compartment of the vehicle.

3. Method according to one of the preceding claims, **characterized in that** the request to assume control is output even if the driver overrides the inter-vehicle distance and cruise-control system.

4. Method according to one of the preceding claims, **characterized in that** the system for inter-vehicle distance and cruise control emits and receives radar signals, by means of which signals vehicles travelling ahead can be detected as target objects.

5. Device for performing inter-vehicle distance and cruise control of a motor vehicle, which device outputs a request to assume control which informs the driver that a critical approaching movement toward a target object is occurring, wherein the activation or deactivation of the request to assume control (13, 15) takes place as a function of
- a fixed minimum distance between the distance- and speed-controlled vehicle and the target object
or
- a relative-speed-dependent minimum distance between the distance and speed-controlled vehicle and a target object
or
- a maximum vehicle deceleration which can be generated by the inter-vehicle distance and cruise controller,
**characterized in that** the device is configured in such a way that the activation thresholds (19) and the deactivation thresholds (20) of the request to assume control are not identical.

6. Device according to Claim 5, **characterized in that** the request to assume control is embodied as a visual display in the driver's field of vision and/or as an acoustic signal in the passenger compartment of the vehicle.

7. Device according to one of Claims 5 or 6, **characterized in that** the system for inter-vehicle distance and cruise control (4) emits and receives radar signals, by means of which signals vehicles travelling ahead can be detected as a target object.

## Revendications

1. Procédé pour informer le conducteur d'un véhicule équipé de régulateur adaptatif de distance et de vitesse (1, 4) par le biais d'une invitation de prise en charge (13, 15) qui est activée (23) ou désactivée (22), et qui signale au conducteur qu'un rapprochement critique d'un objet cible a lieu, l'activation (23) ou la désactivation (22) de l'invitation de prise en charge (13, 15) s'effectuant en fonction
- d'une distance minimale fixe entre le véhicule réglé en termes de la distance et de la vitesse et l'objet cible
ou
- d'une distance minimale dépendante de la vitesse relative entre le véhicule réglé en termes de la distance et de la vitesse et un objet cible
ou
- d'un ralentissement de véhicule maximal pouvant être généré par le régulateur de distance et de vitesse,
**caractérisé en ce que** les seuils d'activation (19) et les seuils de désactivation (20) de l'invitation de prise en charge ne sont pas identiques.

2. Procédé selon la revendication 1, **caractérisé en ce que** l'invitation de prise en charge est un affichage (13) visuel dans le champ de vision du conducteur et/ou un signal (15) acoustique dans l'habitacle du véhicule.

3. Procédé selon l'une quelconque des revendications précédentes, **caractérisé en ce que** l'invitation de prise en charge est émise également lorsque le conducteur contourne le système de réglage de distance et de vitesse.

4. Procédé selon l'une quelconque des revendications précédentes, **caractérisé en ce que** le système de réglage de distance et de vitesse émet et reçoit des signaux radar au moyens desquels des véhicules roulant devant peuvent être détectés en tant qu'objets cibles.

5. Dispositif pour le réglage de distance et de vitesse d'un véhicule qui émet une invitation de prise en charge signalant au conducteur qu'un rapprochement critique d'un objet cible a lieu, **caractérisé en ce que** l'activation ou la désactivation de l'invitation de prise en charge s'effectue en fonction
- d'une distance minimale fixe entre le véhicule réglé en termes de la distance et de la vitesse et l'objet cible
ou
- d'une distance minimale dépendante de la vitesse relative entre le véhicule réglé en termes de la distance et la vitesse et un objet cible
ou
- d'un ralentissement de véhicule maximal pouvant être généré par la régulateur de distance et de vitesse,
**caractérisé en ce que** le dispositif est conçu de telle sorte que les seuils d'activation (19) et les seuils de désactivation (20) de l'invitation de prise en charge ne sont pas identiques.

6. Dispositif selon la revendication 5, **caractérisé en ce que**
l'invitation de prise en charge est marquée en tant qu'affichage visuel dans le champ de vision du conducteur et/ou sous forme de signal acoustique dans l'habitacle du véhicule.

7. Dispositif selon l'une quelconque des revendications 5 ou 6, **caractérisé en ce que** le système de réglage de distance et de vitesse (4) émet et reçoit des signaux radar au moyen desquels des véhicules roulant devant peuvent être détectés en tant qu'objet cible.
